Europäisches Patentamt

European Patent Office

Office européen des brevets

(19)

(11) Numéro de publication: **0 269 167 B1**

# FASCICULE DE BREVET EUROPEEN

(12)

(45) Date de publication de fascicule du brevet: **10.06.92**  (51) Int. Cl.⁵: **G06F  9/22**, G06F 9/28

(21) Numéro de dépôt: **87202188.6**

(22) Date de dépôt: **11.11.87**

(54) **Circuit intégré et procédé de traitement numérique à module auto-cadencé.**

(30) Priorité: **14.11.86 FR 8615852**

(43) Date de publication de la demande:
**01.06.88 Bulletin  88/22**

(45) Mention de la délivrance du brevet:
**10.06.92 Bulletin  92/24**

(84) Etats contractants désignés:
**DE FR GB IT NL**

(56) Documents cités:
**EP-A- 0 131 658**

**COMPUTER, vol. 15, no. 3, mars 1982, pages
43-54, IEEE, Long Beach, California, US; R.
BUDZINSKI et al.: "A restructurable integrated circuit for implementing programmable
digital systems"**

**IEEE PROCEEDINGS OF THE ANNUAL SYM-
POSIUM ON COMPUTER ARCHITECTURE,
23-25 mars 1977, pages 63-69, IEEE, New
York, US; P.M. KOGGE: "The microprogramming of pipelined processors"**

(73) Titulaire: **LABORATOIRES D'ELECTRONIOUE
PHILIPS
3, Avenue Descartes**

**F-94450 Limeil-Brévannes(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**DE GB IT NL**

(72) Inventeur: **Brunel, Jean-Yves Société Civile
S.P.I.D.
209, rue de l'Université
F-75007 Paris(FR)**
Inventeur: **Labrousse, Jean-Michel J. Société
Civile S.P.I.D
209, rue de l'Université
F-75007 Paris(FR)**
Inventeur: **Michel, Jean-Pierre Société Civile
S.P.I.D
209, rue de l'Université
F-75007 Paris(FR)**
Inventeur: **Prevost, Denis, Paul Marc Société
Civile S.P.I.D
209, rue de l'Université
F-75007 Paris(FR)**

Inventeur: **Tychon, Philippe Alfred Société Civile S.P.I.D**
**209, rue de l'Université**
**F-75007 Paris(FR)**


(74) Mandataire: **Landousy, Christian et al**
**Société Civile S.P.I.D. 156, Boulevard Haussmann**
**F-75008 Paris(FR)**

# Description

L'invention concerne un circuit intégré de traitement numérique de données organisé à l'aide d'opérateurs arithmétiques, d'opérateurs logiques, d'opérateurs mémoires, d'opérateurs entrée/sortie, contrôlés par une horloge et par une unité de contrôle qui reçoit des instructions d'un générateur d'instructions et qui transmet aux opérateurs des commandes opératives.

Un circuit intégré de ce genre est connu du document intitulé "A single chip, highly integrated, user programmable microcomputer" D. STAMM, D. BUDDE et B. MORGAN, PHILADELPHIE 1977, IEEE International Solid State Circuit Conference (1977, page 142).

Dans un tel circuit intégré on peut distinguer globalement deux parties : l'unité de traitement des données et l'unité de contrôle. L'unité de traitement est formée de plusieurs opérateurs : des opérateurs arithmétiques, des opérateurs logiques, tels que des registres, de la logique combinatoire (masquage, extension, mise à zéro, décalage), des opérateurs d'entrée/sortie, etc ... Chaque opérateur est défini par sa fonction et par le temps nécessaire pour effectuer cette fonction. L'unité de contrôle décode les instructions et envoie les commandes appropriées aux opérateurs qui effectuent alors l'opération demandée par l'instruction. L'unité de traitement et l'unité de contrôle sont séquencées par des horloges.

Pour définir le séquencement, il faut définir le temps de cycle machine. Ce temps de cycle machine correspond à la microcommande, générée par l'instruction, pour laquelle le temps mis par la donnée pour traverser les opérateurs nécessaires pour l'exécution de cette microcommande est maximal. Ce temps de cycle machine est divisé en un nombre fixe de phases, la durée de chaque phase étant un nombre fixe de demi-périodes d'horloge. Chaque phase valide les commandes envoyées par l'unité de contrôle à un opérateur donné. Les opérateurs d'une chaîne de traitement sont donc actifs suivant les phases successives du cycle machine. Or un tel circuit intégré de traitement numérique de données présente des inconvénients dans l'échange de signaux de contrôle et de données. Cet échange est en effet basé sur un séquencement global des commandes. Tous les signaux de séquencement de chacun des opérateurs sont générés de façon globale à l'extérieur de l'unité de traitement. Cela multiplie le nombre de signaux à générer et augmente la complexité des interconnexions.

De même le temps de cycle machine est déterminé par l'instruction nécessitant le temps d'exécution le plus long, c'est-à-dire la chaîne la plus longue à parcourir, même si de nombreuses instructions ne nécessitent pas cette durée.

De plus dans le cas d'une conception modulaire d'un circuit intégré de traitement numérique, l'optimisation du séquencement est spécifique à chaque circuit développé. L'ajout d'un opérateur dans le circuit développé est rendu très difficile dans un cadre aussi rigide et nécessite souvent la modification de ce séquenceur.

On connaît également le document brevet EP 0 131 658 qui décrit un mécanisme de synchronisation pour un système à multiprocesseurs. Ce document se rapporte uniquement à la partie communication entre la partie contrôle et les processeurs. C'est un système à multiprocesseurs dans le sens classique du terme où tous les processeurs sont reliés en parallèle à un bus commun comprenant n fils dont trois d'entre eux permettent une synchronisation en opérant une gestion de la priorité des processeurs désirant communiquer à l'aide du bus. Mais le contrôle de l'achèvement des tâches de chaque module à l'intérieur d'un même processeur n'est pas pris en considération.

L'invention a pour but de supprimer ces différents inconvénients pour permettre une plus grande modularité du circuit intégré afin de réduire son temps de conception. Pour cela l'invention utilise des modules pré-analysés quant à la fonction qu'ils effectuent et quant au séquencement qui leur est nécessaire.

Dans ce but l'invention telle que définie dans le préambule est remarquable en ce que le circuit intégré de traitement numérique comprend au moins un opérateur qui est muni d'un portier qui reçoit $i$ sémaphores d'entrée et émet $j$ sémaphores de sortie, avec $i$ et $j$ non nuls, le portier recevant de l'unité de contrôle $i$ signaux de contrôle d'entrée et au moins un signal de contrôle de sortie des données de l'opérateur, et, après réception d'au moins un sémaphore d'entrée, provenant d'un portier précédent, validé par son signal de contrôle d'entrée, par un signal de nouvelle instruction et par un signal de validation de l'opérateur issus de l'unité de contrôle, délivrant à son opérateur des signaux adaptés aux paramètres fonctionnels dudit opérateur, et, afin d'opérer d'une manière auto-cadencée, le portier, à l'issue du traitement par l'opérateur, validant la sortie des données par l'opérateur vers au moins un opérateur suivant en émettant au moins un sémaphore de sortie validé par un signal de contrôle de sortie, le sémaphore de sortie étant transmis à au moins un portier suivant afin que ce portier suivant positionne son propre opérateur pour réceptionner lesdites données, ledit portier comprenant en outre des moyens d'inversion de l'état logique des sémaphores d'entrée déjà validés par leurs signaux de contrôle d'entrée lorsque l'opérateur n'a plus besoin de données d'entrée, afin d'en avertir les portiers précédents concernés, et des moyens de réception des sémaphores de sortie validés dont l'état logique a été inversé par des portiers suivants, lesdits moyens de réception renvoyant à l'unité de contrôle un signal de fin d'exécution, la transmission des sémaphores s'opérant successivement jusqu'au portier final, le circuit intégré comprenant des modules constitués chacun de l'opérateur et de son portier, modules qui échangent des données par leurs opérateurs et des sémaphores par leurs portiers, ce qui assure un séquencement auto-cadencé à chaque module, les modules et l'unité de contrôle étant pilotés par l'horloge et par le générateur d'instructions.

Afin de pallier les déficiences des solutions antérieures, l'invention concerne un nouveau mode de protocole et donc de séquencement. L'utilisation de phases générées par un séquenceur externe à l'unité de traitement est supprimée. A chaque opérateur, on associe un portier qui en fait un opérateur auto-cadencé.

Le portier associé à un opérateur gère les échanges de données avec les opérateurs amonts et avals par application d'un protocole. De plus, le portier génère les signaux de cadencement propres à l'opérateur auquel il est associé. De ce fait, chaque opérateur a un séquencement local. Le portier échange également des signaux avec le contrôle.

A chaque bus de données reliant des opérateurs, on ajoute pour cela une connexion supplémentaire reliant les portiers associés à ces opérateurs. L'état logique sur ce fil indique au portier la validité ou non des données sur le bus associé. Cette connexion supplémentaire est appelée un sémaphore.

Les opérateurs peuvent être différenciés suivant le fonctionnement interne de l'opérateur, selon qu'il comporte ou non une fonction interne de mémorisation des données. Le portier associé à un opérateur mémorisant les données fournies, libère ses sémaphores d'entrée validés sitôt cette mémorisation faite. Dans le cas où la mémorisation est inexistante, le maintien de la donnée en entrée nécessite le maintien du sémaphore entrant, tant que les données issues du traitement de l'opérateur ne sont pas mémorisées dans un autre opérateur de la chaîne de traitement. Cela introduit deux types de portier, l'un libérant les sémaphores entrants validés durant l'exécution du traitement par la partie opérative associée, l'autre ne libérant les sémaphores entrants qu'au moment où les sémaphores sortants validés sont libérés par les portiers des opérateurs suivants dans la chaîne de traitement.

Une autre différenciation intervient selon le nombre d'entrées et de sorties : certains opérateurs ne possèdent pas d'entrée mais seulement des sorties, ou ne possèdent pas de sortie mais seulement des entrées. Le cas le plus courant restant qu'un opérateur possède des entrées et des sorties.

Afin de traiter le séquencement des opérateurs qui ne présentent pas de sorties de données, le circuit intégré de traitement numérique de données comprend en outre au moins un opérateur muni d'un portier qui reçoit des signaux de contrôle de l'unité de contrôle, et, après réception d'au moins un sémaphore d'entrée validé par un signal de contrôle d'entrée, par un signal de nouvelle instruction et par un signal de validation de l'opérateur issus de l'unité de contrôle, délivrant à son opérateur des signaux adaptés aux paramètres fonctionnels dudit opérateur, et, afin d'assurer un séquencement auto-cadencé, le portier, à l'issue du traitement par l'opérateur, renvoyant à l'unité de contrôle un signal de fin d'exécution, ledit portier comprenant en outre des moyens d'inversion de l'état logique des sémaphores d'entrée déjà validés par leurs signaux de contrôle d'entrée lorsque l'opérateur n'a plus besoin de données d'entrée afin d'en avertir les portiers précédents concernés.

Afin de traiter le séquencement des opérateurs qui ne présentent pas d'entrées de données, le circuit intégré de traitement numérique de données comprend en outre au moins un opérateur muni d'un portier qui reçoit des signaux de contrôle de l'unité de contrôle, et, après réception d'un signal de nouvelle instruction et d'un signal de validation de l'opérateur issus de l'unité de contrôle, délivrant à son opérateur des signaux adaptés aux paramètres fonctionnels dudit opérateur, et, afin d'assurer un séquencement auto-cadencé, le portier, à l'issue du traitement par l'opérateur, validant la sortie des données par l'opérateur vers au moins un opérateur suivant en émettant au moins un sémaphore de sortie validé par un signal de contrôle de sortie, le sémaphore de sorties étant transmis à au moins un portier suivant afin que ce portier suivant positionne son propre opérateur pour réceptionner lesdites données, ledit portier comprenant en outre des moyens de réception des sémaphores de sortie validés dont l'état logique a été inversé par les portiers suivants, lesdits moyens de réception renvoyant à l'unité de contrôle un signal de fin d'exécution.

L'opérateur et son portier sont utilisés suivant différents modes de fonctionnement, quatre cas se présentent :

- l'opérateur traite une donnée entrante et fournit une donnée consécutivement en sortie (exemple : registre, unité arithmétique et logique),
- l'opérateur ne fournit qu'une donnée en sortie (exemple : mémoire RAM en lecture, mémoire ROM en table de constantes),

- l'opérateur ne traite qu'une donnée en entrée (exemple : chargement d'un compteur, écriture dans la RAM),
- un opérateur, à la demande du contrôle, peut ne réaliser ni entrée ni sortie mais exécuter une opération interne (exemple : activation d'un compteur précédemment chargé).

Le protocole de fonctionnement entre deux modules 1 et 2 successifs (portier + opérateur) qui se transmettent des données, se décompose de la manière suivante :

- lorsque l'opérateur 1 a traité ses données, le portier 1 active son sémaphore de sortie qui est le sémaphore d'entrée du portier 2,
- le portier 2 détecte cette activation et commence à envoyer des signaux de cadencement à l'opérateur 2,
- l'opérateur 2 récupère les données envoyées par l'opérateur 1,
- l'opérateur 2 traite les données au rythme du cadencement délivré par son portier,
- lorsque l'opérateur 2 a terminé le traitement, le portier 2 active son sémaphore de sortie.

Deux cas se présentent :

- lorsque l'opérateur 2 est un opérateur qui possède une fonction de mémorisation et lorsque l'opérateur 2 a mémorisé les données, le portier 2 désactive son sémaphore d'entrée.
- lorsque l'opérateur 2 ne possède pas de fonction de mémorisation, le portier 2 ne désactive son sémaphore d'entrée que lorsque son propre sémaphore de sortie a été désactivé.

Pour cela l'invention est remarquable en ce que le portier comprend i circuits de validation d'entrée qui reçoivent chacun un des i sémaphores d'entrée et un des i signaux de contrôle d'entrée, et j circuits de validation de sortie qui reçoivent chacun un des j signaux de contrôle de sortie ainsi que le signal de fin de traitement de l'opérateur et qui délivrent chacun un des j sémaphores de sortie, les circuits de validation d'entrée commandant un générateur d'une impulsion qui est contrôlé par le signal de nouvelle instruction et par le signal de validation de l'opérateur et qui est réuni à un registre à décalage à k étages qui délivre les signaux adaptés aux paramètres fonctionnels de l'opérateur ainsi que le signal de fin de traitement par l'opérateur, et qui active les circuits de validation de sortie afin qu'ils émettent leurs sémaphores de sortie, chacun des i circuits de validation d'entrée comprenant un moyen d'inversion de l'état logique de leur sémaphore d'entrée, moyen qui est opérationnel pour chaque circuit de validation d'entrée sélectionné, lorsqu'un signal de libération de sémaphore a été généré, le portier comprenant en outre un autre générateur d'une impulsion lui-même commandé par le signal de fin de traitement par l'opérateur et par tous les sémaphores de sortie précédemment validés après qu'ils ont été inversés par les portiers suivants, l'autre générateur d'impulsion renvoyant à l'unité de contrôle le signal de fin d'exécution.

Il est également possible à chaque portier de dialoguer avec l'unité de contrôle à l'aide d'un sémaphore. Pour cela chaque portier reçoit de l'unité de contrôle son signal de nouvelle instruction et émet son signal de fin d'exécution, sous la forme d'un sémaphore dont l'état logique peut être inversé par le portier pour transmettre à l'unité de contrôle le message de fin d'exécution.

Les signaux adaptés délivrés par le portier à son opérateur sont paramétrables afin de les rendre adaptables aux paramètres propres à chaque opérateur, paramètres qui définissent la fonction et le temps de traitement de chaque opérateur. Pour cela le nombre d'étages et le nombre de sorties du registre à décalage sont déterminés par la fonction et par le temps de traitement de l'opérateur.

Lors de la conception du circuit intégré de traitement numérique, les opérateurs et leurs portiers peuvent constituer une bibliothèque de modules précaractérisés, qui peuvent être asssemblés pour constituer ledit circuit intégré. Les portiers placés en bibliothèque sont de conception analogue, mais il est possible au moment de la conception d'adapter certaines caractéristiques à l'opérateur auquel le portier est associé. Ainsi, selon que l'opérateur possède ou non la fonction de mémorisation des données, le portier pourra désactiver son sémaphore d'entrée soit respectivement dès que l'opérateur n'a plus besoin des données d'entrée, soit lorsque les sémaphores de sortie validés auront été désactivés par les portiers suivants. Cette possibilité est obtenue à la conception du circuit intégré.

Pour cela, lorsque l'opérateur dispose d'une mémorisation interne, le signal de libération des sémaphores qui opère sur les i circuits de validation d'entrée, est obtenu par la validation de la fin du traitement de l'opérateur, en réunissant une sortie du registre à décalage aux circuits de validation d'entrée. De même lorsquel'opérateur ne dispose pas d'une mémorisation interne, le signal de libération des sémaphores, qui opère sur les i circuits de validation d'entrée, est obtenu en réunissant la sortie de l'autre générateur d'une impulsion avec les circuits de validation d'entrée afin que la validation ne puisse s'effectuer que lorsque le portier suivant a renvoyé le sémaphore inversé.

Une autre possibilité de rendre paramétrable le portier est d'adapter le cadencement qu'il fournit à l'opérateur en adaptant ce cadencement à la tâche effectuée par l'opérateur au cours d'une instruction. Ainsi une opération logique ET, OU, sur des données ou une opération arithmétique (addition avec retenue) effectuées toutes les deux par le même opérateur arithmétique et logique, ne vont pas nécessiter le même temps d'exécution. Pour cela le portier paramétrable en temps permet dynamiquement de s'adapter à ce temps d'exécution, en disposant du type d'opération à exécuter à partir de l'unité de contrôle.

Pour rendre le portier paramétrable en temps, l'unité de contrôle délivre à l'opérateur un signal de type d'opération que le portier prend en compte afin qu'au cours d'une quelconque opération d'un opérateur le nombre d'étages concernés du registre à décalage soit paramétré de sorte que la durée allouée au traitement soit la plus proche possible du temps nécessaire à l'opérateur pour cette opération.

Dans certaines chaînes de traitement du circuit intégré de traitement, il apparaît des boucles de traitement où la sortie du dernier opérateur est reliée à l'entrée du premier opérateur. Mais lorsque le traitement total a été effectué par la boucle, la sortie des données d'un quelconque des opérateurs de la boucle peut être effectuée rapidement, sans passer par les opérateurs devenus inopérant à l'aide d'un bus d'extraction. Pour cela dans une chaîne d'opérateurs de rang n à (n + p), avec n et p entiers non nuls, l'opérateur de rang n est réuni à l'opérateur de rang (n + p) par un bus d'extraction de données.

L'invention se caractérise également par un procédé de fonctionnement d'un circuit intégré de traitement numérique tel que défini dans le préambule, le circuit intégré selon l'invention comprenant au moins un opérateur muni d'un portier, l'opérateur possédant une fonction de mémorisation, ledit procédé comprenant les étapes suivantes :

a. réception par un circuit d 'entrée de validation du portier d'au moins un sémaphore d'entrée qui est validé par un signal de contrôle d'entrée issu de l'unité de contrôle et activation d'un générateur d'impulsion du portier,

b. émission par le générateur d'impulsion d'une impulsion sur l'entrée d'un registre à décalage à k étages,

c. émission par le registre à décalage de signaux adaptés aux paramètres de l'opérateur,

d. émission par le registre à décalage, sur les circuits de sortie de validation du portier, d'un signal d'achèvement du traitement par l'opérateur,

e. inversion de l'état logique du sémaphore d'entrée lorsque l'opérateur n'a plus besoin de données d'entrée, afin de transmettre au portier qui le précède le message de prise en compte des données,

f. émission par le portier d'au moins un sémaphore de sortie validé par un signal de contrôle de sortie sur au moins un portier suivant,

g. réception des données de l'opérateur par l'opérateur suivant,

h. envoi à l'unité de contrôle du signal de fin d'exécution après inversion de l'état logique des sémaphores de sortie validés.

De même l'invention se caractérise également par un procédé de fonctionnement d'un circuit intégré de traitement numérique tel que défini dans le préambule, le circuit intégré selon l'invention comprenant au moins un opérateur muni d'un portier, l'opérateur ne possédant pas une fonction de mémorisation, ledit procédé comprenant les étapes suivantes :

a. réception par un circuit d'entrée de validation du portier d'au moins un sémaphore d'entrée qui est validé par un signal de contrôle d'entrée issu de l'unité de contrôle et activation d'un générateur d'impulsions du portier,

b. émission par le générateur d'impulsion d'une impulsion sur l'entrée d'un registre à décalage à k étages,

c. émission par le registre à décalage de signaux adaptés aux paramètres de l'opérateur,

d. émission par le registre à décalage, sur les circuits de sortie de validation du portier, d'un signal d'achèvement du traitement par l'opérateur,

e. émission par le portier d'au moins un sémaphore de sortie validé par un signal de contrôle de sortie sur au moins un portier suivant,

f. réception des données de l'opérateur par l'opérateur suivant,

g. réception du sémaphore de sortie inversé par le portier suivant correspondant à la prise en compte des données par l'opérateur suivant, et génération d'une impulsion de libération du sémaphore d'entrée,

h. désactivation du sémaphore d'entrée par inversion du signal afin d'avertir le portier précédent de la fin de traitement.

i. envoi à l'unité de contrôle du signal de fin d'exécution après inversion de l'état logique des sémaphores de sortie validés.

Le circuit intégré de traitement numérique (CITN) selon l'invention présente plusieurs avantages.

- Le séquencement des opérateurs est local dans la nouvelle approche, il suffit d'avoir une horloge unique pour tout le CITN. Le nombre de signaux de séquencement parcourant le CITN est réduit à la seule transmission de l'horloge.
- Les performances du CITN sont améliorées, car la notion de cycle machine fixe n'existe plus, les opérateurs étant auto-cadencés, le temps nécessaire au traitement des données dans une chaîne d'opérateurs auto-cadencés ne dépendant que des opérateurs eux-mêmes. Ce temps est égal à la somme des temps demandés par chaque opérateur traversé. Une instruction n'utilise donc que le temps qui lui est vraiment nécessaire.

- La conception modulaire est très simple dans cette approche. On peut sans problème rajouter un opérateur auto-cadencé à un circuit déjà développé. Il n'est pas nécessaire de redéfinir le séquencement de l'unité de traitement du CITN. Cette approche donne beaucoup de souplesse dans la conception d'un CITN.

La modularité offre de plus une testabilité accrue de l'ensemble, grâce à la simplicité d'interconnexion des opérateurs. Il suffit de rajouter sur les sémaphores les plus caractéristiques, des plots de test sous pointes pour tester les opérateurs les plus complexes.

L'invention sera mieux comprise à l'aide des figures suivantes données à titre d'exemple non limitatif qui représentent :

Figures 1A et 1B : respectivement un schéma logique et un diagramme des temps de l'art antérieur.

Figure 2 : un schéma général d'un module selon l'invention.

Figure 3 : un schéma d'un module placé entre deux modules voisins.

Figure 4 : un schéma détaillé d'un portier selon l'invention paramétrable en mode fixe à la conception.

Figure 5 : un schéma détaillé d'un portier selon l'invention paramétrable en mode dynamique à la conception.

Figure 6 : un schéma électrique du contrôle de l'état logique d'un sémaphore d'entrée.

Figure 7A : un schéma logique d'un exemple d'une chaîne de modules présentant différentes configurations d'entrée et de sortie.

Figure 7B : le diagramme des temps de la figure 7A.

Pour ne pas alourdir le texte dans toutes les figures, une connexion barrée indique qu'il s'agit d'un bus de données à plusieurs bits. Il faut en conséquence répéter la connexion concernée autant de fois qu'il y a de bits transférés.

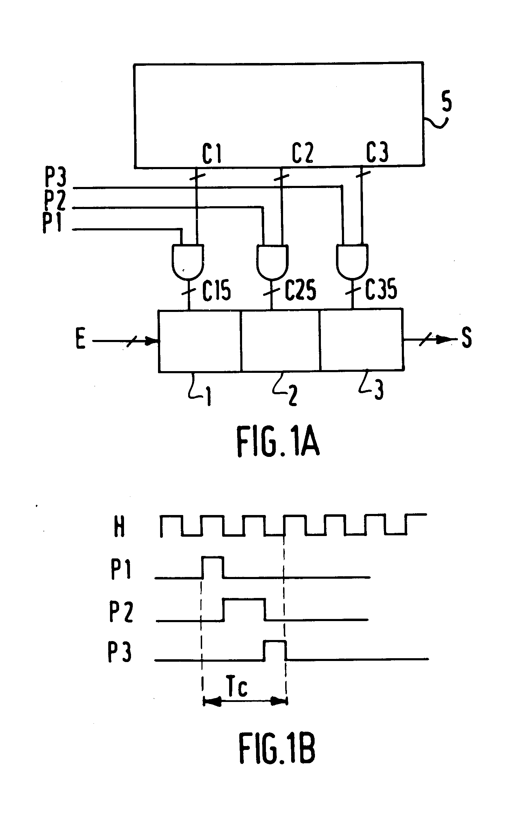

Les figures 1A et 1B fournissent une illustration dans un cas simple du protocole d'échange de données selon l'art antérieur.

L'unité de contrôle 5 fournit une micro-instruction composée des commandes C1, C2, C3 à trois opérateurs 1, 2, 3. Cette micro-instruction est validée par trois phases P1, P2, P3 afin que les trois opérateurs effectuent successivement leurs opérations. Les données d'entrée E entrent dans le premier opérateur et les données de sortie S sont extraites du troisième opérateur. Les opérateurs 1 et 3 nécessitent chacun une demi-période d'horloge pour traiter les données. Les phases P1 et P3, validant les bus de commandes opératives C1 et C3 ont donc également une durée d'une demi-période d'horloge. Par contre, l'opérateur 2 nécessite une période entière d'horloge, et par conséquent P2 validant le bus C2 dure une période d'horloge. Le temps de cycle machine est égal ici à deux périodes d'horloge.

Ces trois phases sont apparentes dans le document de l'art antérieur déjà cité. Elles sont fournies aux différentes unités qui constituent le circuit intégré. Ceci nécessite un travail important d'interconnexion et occupe une partie importante de la surface du circuit intégré.

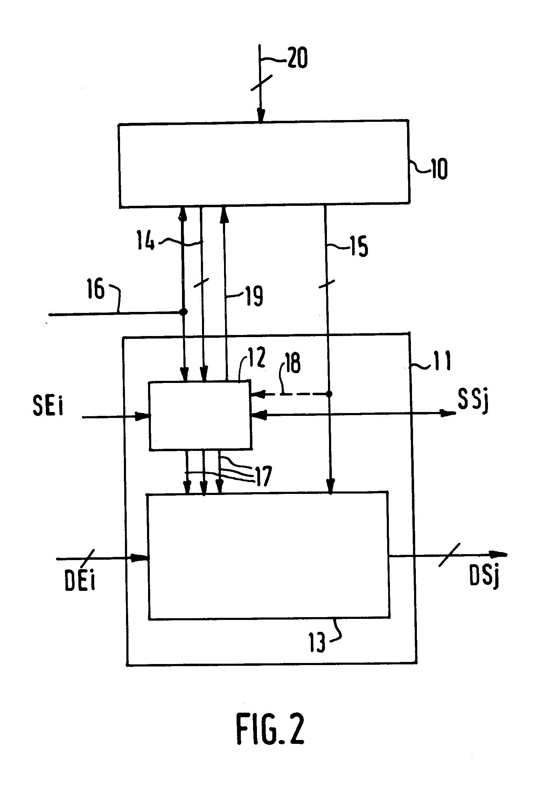

La figure 2 représente le schéma général d'un module selon l'invention. Le module 11 est constitué d'un portier 12 et d'un opérateur 13. Le portier 12 reçoit de l'unité de contrôle 10 des signaux 14 de contrôle d'entrée et de contrôle de sortie, un signal de nouvelle instruction et un signal de validation de l'opérateur, et lui transmet un signal de fin d'exécution 19. Une horloge 16 contrôle le fonctionnement du portier 12. L'unité de contrôle 10 reçoit sur les connexions 20, des instructions d'un générateur d'instructions non représenté. L'unité de contrôle transmet à l'opérateur 13 des commandes opératives 15. Ces commandes opératives constituent les signaux de travail pour effectuer par exemple, dans un opérateur arithmétique et logique, une addition, un décalage, une multiplication, etc... Le portier 12 reçoit $i$ sémaphores d'entrée $SE_i$ et transmet $j$ sémaphores de sortie $SS_j$. Le portier 12 fournit à l'opérateur 13 les signaux de cadencement 17 qui lui sont nécessaires. L'opérateur 13 reçoit des données d'entrée $DE_i$ sous la forme de $i$ mots de plusieurs bits. De même il fournit des données de sortie $DS_j$ sous la forme de $j$ mots de plusieurs bits.

Lorsque l'opérateur 13 justifie l'utilisation d'un portier 12 paramétrable en temps en mode dynamique, il est nécessaire que le portier 12 reçoive également le type d'instruction envoyé à l'opérateur. Ceci est effectué à l'aide de la connexion 18, qui, en transmettant au portier le type d'instruction à exécuter, lui permet d'adapter en conséquence le cadencement qu'il fournit à l'opérateur.

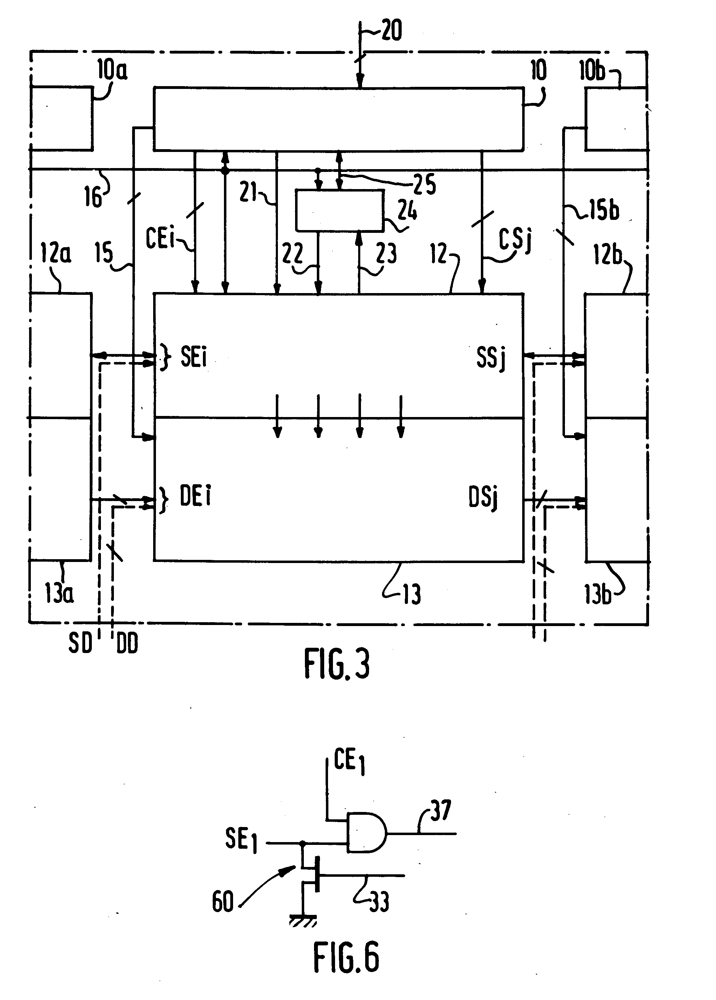

La figure 3 représente un schéma d'un module disposé entre deux modules voisins. Le portier 12 échange avec le portier précédent 12a un des $i$ sémaphores $SE_i$, les autres provenant d'autres portiers, tel que SD sur la figure 3, et échange avec le portier suivant 12b un des $j$ sémaphores $SS_j$. De même l'opérateur 13 reçoit de l'opérateur précédent 13a un des bus de données $DE_i$ et transmet à l'opérateur suivant 13b un des bus de données $DS_j$. Les autres bus de données $DE_i$ proviennent d'autres opérateurs, par exemple DD sous le contrôle du sémaphore SD.

Le portier 12 reçoit de l'unité de contrôle 10 les i signaux de contrôle d'entrée $CE_i$ et les j signaux de contrôle de sortie $CS_j$. Ces signaux contrôlent respectivement les sémaphores d'entrée $SE_i$ et de sortie $SS_j$. Le portier 12 reçoit également en provenance de l'unité de contrôle, un signal de validation 21 de l'opérateur, et un signal de nouvelle instruction 22. Le portier transmet vers l'unité de contrôle un signal de fin d'exécution 23. Ces signaux de nouvelle instruction 22 et de fin d'exécution 23 sont transmis à l'unité de contrôle 10 à travers un circuit de contrôle 24 sous forme d'un sémaphore de contrôle 25. Dans ce cas, le circuit de contrôle possède des moyens d'inversion de l'état logique du sémaphore de contrôle 25 ainsi qu'un générateur d'impulsion et l'unité de contrôle 10 possède des moyens de réception du sémaphore inversé. Le générateur d'impulsion génère le signal de nouvelle instruction 22. Le circuit de contrôle 24 peut être incorporé au portier 12.

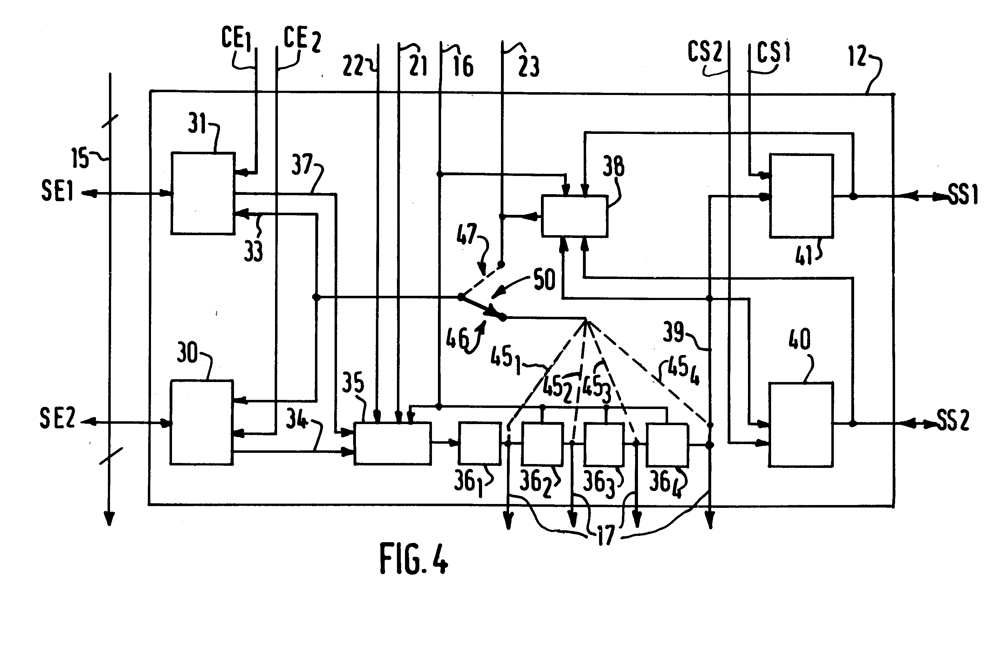

La figure 4 représente un schéma détaillé d'un portier paramétrable à la conception en mode fixe. Pour simplifier, le portier 12 représenté comprend seulement deux sémaphores d'entrée et deux sémaphores de sortie.

Le circuit de validation d'entrée 31 reçoit le sémaphore SE1, le signal de contrôle d'entrée CE1 et un signal de libération de sémaphore 33. Le circuit de validation 31 active le générateur d'impulsion 35 par un signal de déclenchement 37. De la même manière, le circuit de validation d'entrée 30 reçoit le sémaphore SE2, le signal de contrôle d'entrée CE2 et le signal de libération de sémaphore 33. Il active le générateur d'impulsion 35 par le signal de déclenchement 34.

Le générateur d'impulsion 35 est également contrôlé par l'horloge 16, par le signal de nouvelle instruction 22 et par le signal de validation de l'opérateur 21.

Le générateur d'impulsion émet une impulsion vers un registre à décalage constitué dans l'exemple de quatre étages $36_1$, $36_2$, $36_3$, $36_4$ reliés entre eux en série selon l'art connu. Le registre à décalage fournit à l'opérateur les signaux de cadencement 17 qui lui sont nécessaires.

Le circuit de validation de sortie 41 reçoit le signal de contrôle de sortie $CS_1$ et la sortie 39 du registre à décalage, et fournit le sémaphore $SS_1$. De même le circuit de validation de sortie 40 reçoit le signal de contrôle de sortie $CS_2$ et la sortie 39 du registre à décalage, et fournit le sémaphore $SS_2$. Les deux sémaphores $SS_1$ et $SS_2$ peuvent activer un autre générateur d'impulsion 38 qui reçoit également la sortie 39 du registre à décalage et l'horloge 16. Cet autre générateur d'impulsion 38 émet le signal de fin d'instruction 23.

Selon que l'opérateur présente ou non une fonction de mémorisation, le signal de libération des sémaphores 33 va pouvoir être issu de deux voies différentes. Ceci est déterminé par le câblage initial à la conception du circuit.

Deux cas sont à considérer :

- Lorsque l'opérateur possède une fonction de mémorisation des données, par exemple un registre, une mémoire, les données sont alors mémorisées dans l'opérateur. Le temps de traitement par l'opérateur est connu à l'avance, et en conséquence le sémaphore peut être libéré après un délai fixé à l'avance. Ce délai fixe est obtenu en réalisant l'une des connexions $45_1$, $45_2$, $45_3$ ou $45_4$. Dans ce cas le commutateur 50 est dans la position 46 et fournit ainsi le signal de libération du sémaphore 33 aux circuits de validation d'entrée 30 et 31. Les données à l'entrée de l'opérateur, peuvent alors être changées, et l'opérateur précédent peut être prévenu qu'il est libre de prendre en compte une nouvelle instruction. Ceci est obtenu par l'intermédiaire du circuit d'entrée sélectionné 30 ou 31 du portier 12, qui modifie l'état logique du sémaphore échangé avec le portier de l'opérateur précédent 13a.

- Lorsque l'opérateur ne comporte pas d'élément de mémorisation, il ne faut pas modifier les données à l'entrée tant que l'opérateur suivant 13b a toujours besoin de données valides sur son entrée. C'est la réception des sémaphores de sortie $SS_1$, $SS_2$ désactivés, qui libère les sémaphores d'entrée $SE_1$, $SE_2$. Ceci est contrôlé par l'autre générateur d'impulsion 38 qui examine l'état logique sur les sémaphores entre le portier 12 et les portiers suivants. Lorsque l'état logique des sémaphores validés ont été inversés, le générateur d'impulsion 38 délivre une impulsion qui est transmise au circuit d'entrée du portier. Dans ce cas le commutateur 50 est dans la position 47 et fournit le signal de libération du sémaphore aux circuits de validation d'entrée 30 et 31. Ceci permet de changer l'état du sémaphore échangé avec le portier 12a de l'opérateur précédent 13a, et de signaler à l'unité de contrôle que l'opérateur 13 est prêt à accepter une nouvelle instruction.

  Dans le cas d'un opérateur comportant un élément de mémorisation, le générateur d'impulsion 38 a pour but de signaler à l'unité de contrôle la disponibilité de l'opérateur.

Le début d'exécution d'une opération est fixé par l'unité de contrôle qui émet les commandes suivantes (figures 3 et 4) :

- initialisation du début d'une nouvelle instruction par la connexion 22,
- si l'opérateur est concerné par cette opération, il reçoit alors une information de validation par la connexion 21,

- si l'opérateur comporte plusieurs bus de données en entrée l'unité de contrôle lui signale
sur quel bus les données à traiter sont à
prélever à l'aide des signaux de contrôle $CE_1$
ou $CE_2$,
- si l'opérateur est relié à un bus de sortie, qui
peut être utilisé par plusieurs opérateurs suivants, l'unité de contrôle indique quel est
l'opérateur suivant en sélectionnant le signal
de contrôle $CS_1$ ou $CS_2$.

Le circuit sélectionné examine alors l'état logique de son sémaphore. Par exemple l'état logique
1 indique au circuit d'entrée que les données sont
valides et peuvent être traitées.

A partir de ce moment, le générateur d'impulsion 35 émet une impulsion qui initialise l'opération
à effectuer par l'opérateur. Deux cas sont alors à
considérer selon la durée du traitement :

- Si l'opérateur est simple, c'est-à-dire dont le
temps d'exécution est inférieur ou égal à une
demi-période de l'horloge principale, alors
une seule impulsion est suffisante pour que
la fonction soit exécutée. Dans ce cas le
registre à décalage ne comporte qu'une seule cellule. Un exemple typique de ce genre
d'opérateur est un registre verrouillable.
- Si l'opérateur est plus complexe, ou requiert
plus de temps de traitement, la durée d'exécution de l'opération est ajustée par pas de
demi-périodes de l'horloge principale, de telle
façon que cette durée soit toujours strictement supérieure à la durée d'exécution de
l'opérateur. Ceci est aisément obtenu en modifiant le nombre de cellules du registre à
décalage. On peut ainsi par exemple approcher au plus près le temps d'accès $t_{acc}$ d'une
mémoire interne. Le nombre de cellules nécessaire est déterminé par la relation :

$$n = 1 + |t_{acc} - t_{acc} (\text{modulo } T/2)|/(T/2)$$

Avec un exemple à 4 registres, lorsque l'impulsion envoyée par le générateur d'impulsion 35 parvient à la sortie $36_4$ du registre à décalage, les
données sont valides à la sortie de l'opérateur.
Ceci est indiqué à l'opérateur suivant par l'intermédiaire d'un des sémaphores $SS_1$ ou $SS_2$, par
exemple par un état logique 1. Cette sélection est
faite par l'unité de contrôle.

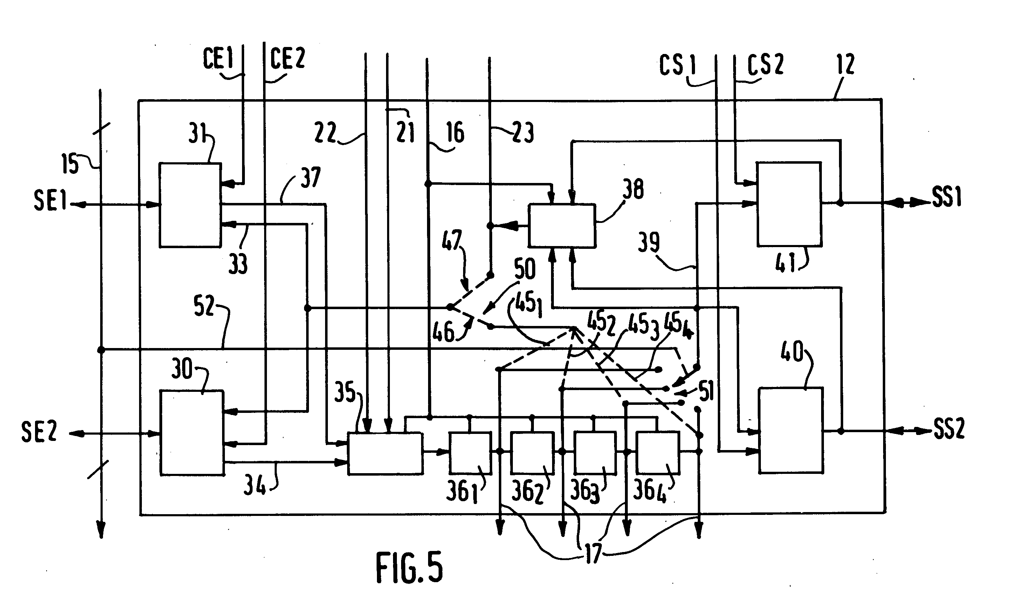

La figure 5 représente un schéma d'un portier
selon l'invention paramétrable à la conception en
mode dynamique. Les mêmes éléments que ceux
de la figure 4 y sont indiqués avec les mêmes
repères. Mais pour rendre le portier 12 paramétrable dynamiquement, ce portier comprend un autre
commutateur 51 qui est commandé par la connexion 52. Celle-ci prélève dans les commandes opératives 15, celle correspondant au type
d'instruction à exécuter. Ainsi pour un opérateur à
fonctions multiples, certaines tâches peuvent nécessiter un temps court et d'autres un temps long.
Ce commutateur 51 permet ainsi de prélever le
signal de fin de traitement de l'opérateur, qui apparaît sur la connexion 39, sur différentes sorties du
registre à décalage. Ceci permet de ne laisser à
l'opérateur que juste le temps qui lui est nécessaire pour effectuer chaque opération.

Il est ainsi possible d'améliorer l'optimisation
du temps d'exécution d'un opérateur selon le type
d'opération qu'il a à effectuer. Il peut s'agir par
exemple d'une unité arithmétique et logique qui a à
effectuer successivement une opération logique qui
ne prend qu'un temps élémentaire, puis une opération arithmétique qui, avec la propagation de la
retenue, nécessite plusieurs temps élémentaires.
Cette programmation permet de n'utiliser que le
nombre de temps élémentaires nécessaires.

D'une façon générale, pour chaque portier, le
nombre de circuits d'entrée est identique au nombre de chemins de données qui sont connectés à
l'entrée de l'opérateur. De même le nombre de
circuits de sortie est identique au nombre de destinations de données issues de l'opérateur. Enfin le
nombre de registres à décalage permet de fixer la
durée en nombre de demi-périodes de l'horloge
principale, qui est allouée à l'opérateur pour réaliser la fonction qui lui est demandée.

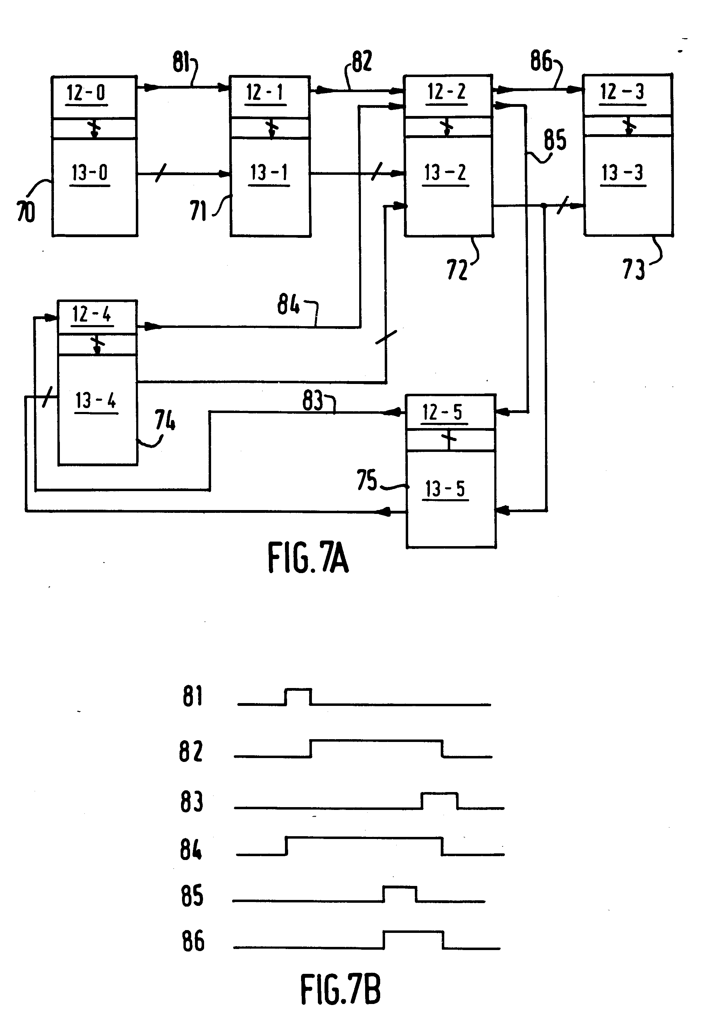

Le principe du protocole par sémaphore utilise
les deux états logiques du sémaphore, selon que
l'échange se fait en provenance ou vers l'autre
portier. La figure 6 indique un exemple de réalisation de ce changement d'état logique. Ainsi supposons que le signal de libération de sémaphore 33
soit à l'état logique 0. Lorsque le signal de contrôle
d'entrée $CE_1$ et le sémaphore d'entrée $SE_1$ sont à
l'état logique 1, le signal de déclenchement 37 est
à l'état haut, et le protocole s'effectue comme
décrit précédemment. Lorsque le signal de libération de sémaphore 33 passe à l'état logique 1
selon le processus décrit, le niveau logique du
sémaphore $SE_1$ est abaissé par le transistor MOS
60, ce qui transmet au portier précédent l'indication
que l'opérateur n'a plus besoin de données en
entrée, libérant ainsi le portier précédent.

La figure 7A représente, à titre d'exemple très
simplifié, une chaîne fictive de traitement de données où différents types d'opérateurs sont représentés :

- le module 70 est une ROM ne disposant que
d'un bus de sortie de données,
- les modules 71 et 75 sont des registres disposant chacun d'un bus d'entrée et d'un bus
de sortie de données,
- le module 72 est une unité arithmétique et logique qui dispose de deux bus d'entrée et d'un bus de sortie,

- le module 73 est un compteur qui dispose d'un bus d'entrée de données,
- le module 74 est une RAM qui dispose d'un bus d'entrée et d'un bus de sortie de données.

A l'aide des signaux de commande et des commandes opératives issus de l'unité de contrôle, le circuit effectue, par exemple, les opérations suivantes :

- le module 70 (ROM) transfère ses données au module 71 (registre) qui les mémorise,
- le module 71 transfère ses données, en les maintenant surses sorties, au module 72 (unité arithmétique et logique sans mémorisation),
- le module 74 transfère ses données au module 72,
- le module 72 calcule les résultats et les transfère au module 75 (registre) qui les mémorise, le module 72 transfère également les résultats au module 73 (compteur) qui retarde la remise à zéro du sémaphore par rapport au module 75 (registre),
- le module 75 (registre) présente les données au module 74 (RAM),
- le module 73 (compteur) libère le sémaphore, ce qui permet au module 72 de libérer les sémaphores 82 et 84,
- le module 74 (RAM) passe en mode écriture, mémorise la donnée et libère le sémaphore.

Chaque dessin des modules 70 à 75 représentés sur la figure 7A se subdivisent en une partie supérieure 12-0 à 12-5 représentant le portier et une partie inférieure 13-0 à 13-5 représentant l'opérateur.

Le diagramme des temps de cet exemple est représenté sur la figure 7B en ce qui concerne l'échange des sémaphores 81 à 86 dans le cas du fonctionnement qui vient d'être décrit.

**Revendications**

1. Circuit intégré de traitement numérique de données organisé à l'aide d'opérateurs (13, 13a, 13b) arithmétiques, d'opérateurs logiques, d'opérateurs mémoire, d'opérateurs entrée/sortie contrôlés par une horloge (16) et par une unité de contrôle (10) qui reçoit des instructions (20) d'un générateur d'instructions et qui transmet aux opérateurs des commandes opératives (15), caractérisé en ce que le circuit intégré comprend au moins un opérateur (13, 13a, 13b) qui est muni d'un portier (12) qui reçoit i sémaphores d'entrée ($SE_i$) et émet j sémaphores de sortie ($SS_j$), avec i et j non nuls, le portier recevant de l'unité de contrôle (10) i signaux (14) de contrôle d'entrée et au moins un signal (14) de contrôle de sortie des données de l'opérateur, et, après réception d'au moins un sémaphore d'entrée ($SE_i$), provenant d'un portier précédent (12a), validé par son signal de contrôle d'entrée ($CE_i$), par un signal (22) de nouvelle instruction et par un signal (21) de validation de l'opérateur issus de l'unité de contrôle (10), délivrant à son opérateur (13) des signaux (15) adaptés aux paramètres fonctionnels dudit opérateur, et, afin d'opérer d'une manière auto-cadencée, le portier (12), à l'issue du traitement par l'opérateur (13), validant la sortie des données par l'opérateur (13) vers au moins un opérateur suivant (13b) en émettant au moins un sémaphore de sortie ($SS_j$) validé par un signal de contrôle de sortie, le sémaphore de sortie ($SS_j$) étant transmis à au moins un portier suivant (12b) afin que ce portier suivant (12b) positionne son propre opérateur (13b) pour réceptionner lesdites données, ledit portier (12) comprenant en outre des moyens d'inversion (38) de l'état logique des sémaphores d'entrée ($SE_i$) déjà validés par leurs signaux de contrôle d'entrée, lorsque l'opérateur (12) n'a plus besoin de données d'entrée, afin d'en avertir les portiers précédents (12a) concernés, et des moyens de réception (30, 31) des sémaphores de sortie validés dont l'état logique a été inversé (50, 46, 36, 38) par des portiers suivants (12b), lesdits moyens de réception renvoyant à l'unité de contrôle un signal (23) de fin d'exécution, la transmission des sémaphores s'opérant successivement jusqu'au portier final, le circuit intégré comprenant des modules (11) constitués chacun de l'opérateur (13) et de son portier (12), modules qui échangent des données par leurs opérateurs et des sémaphores par leurs portiers, ce qui assure un séquencement auto-cadencé à chaque module, les modules et l'unité de contrôle étant pilotés par l'horloge et par le générateur d'instructions.

2. Circuit intégré selon la revendication 1, caractérisé en ce qu'il comprend en outre au moins un opérateur muni d'un portier qui reçoit des signaux de contrôle de l'unité de contrôle, et, après réception d'au moins un sémaphore d'entrée validé par un signal de contrôle d'entrée, par un signal de nouvelle instruction et par un signal de validation de l'opérateur issus de l'unité de contrôle, délivrant à son opérateur des signaux adaptés aux paramètres fonctionnels dudit opérateur, et, afin d'assurer un séquencement auto-cadencé, le portier, à l'issue du traitement par l'opérateur, renvoyant à l'unité de contrôle un signal (23) de fin d'exécution, ledit portier comprenant en outre des moyens (50, 33, 31, 30) d'inversion de l'état logique des sémaphores d'entrée déjà validés par leurs signaux de contrôle d'entrée ($CE_1$, $CE_2$) lorsque l'opérateur (13) n'a plus besoin de données d'entrée afin d'en avertir les portiers précédents (12a) concernés.

3. Circuit intégré selon une des revendications 1 ou 2, caractérisé en ce qu'il comprend en outre au moins un opérateur muni d'un portier qui reçoit des signaux de contrôle de l'unité de contrôle, et, après réception d'un signal de nouvelle instruction et d'un signal de validation de l'opérateur issus de l'unité de contrôle, délivrant à son opérateur des signaux adaptés aux paramètres fonctionnels dudit opérateur, et, afin d'assurer un séquencement auto-cadencé, le portier, à l'issue du traitement par l'opérateur, validant la sortie des données par l'opérateur vers au moins un opérateur suivant en émettant au moins un sémaphore de sortie validé par un signal de contrôle de sortie, le sémaphore de sortie étant transmis à au moins un portier suivant afin que ce portier suivant positionne son propre opérateur pour réceptionner lesdites données, ledit portier comprenant en outre des moyens de réception des sémaphores de sortie validés dont l'état logique a été inversé par des portiers suivants, lesdits moyens de réception renvoyant à l'unité de contrôle un signal de fin d'exécution.

4. Circuit intégré selon une des revendications 1 à 3, caractérisé en ce que les signaux adaptés délivrés par le portier à son opérateur sont paramétrables (51, $45_1$-$45_4$, $36_1$-$36_4$) afin de les rendre adaptables aux paramètres propres à chaque opérateur, paramètres qui définissent la fonction et le temps de traitement de chaque opérateur.

5. Circuit intégré selon une des revendications 1 à 4, caractérisé en ce que chaque portier reçoit de l'unité de contrôle son signal (22) de nouvelle instruction et émet son signal (23) de fin d'exécution, sous la forme d'un sémaphore (25) dont l'état logique peut être inversé par le portier pour transmettre à l'unité de contrôle (10) le message de fin d'exécution.

6. Circuit intégré selon une des revendications 1 à 5, caractérisé en ce que dans une chaîne d'opérateurs de rang n à (n + p), avec n et p entiers non nuls, l'opérateur de rang n est réuni à l'opérateur de rang (n + p) par un bus d'extraction de données.

7. Circuit intégré selon une des revendications 1 à 6, caractérisé en ce que le portier comprend i circuits de validation d'entrée (30, 31) qui reçoivent chacun un des i sémaphores d'entrée ($SE_1$, $SE_2$) et un des i signaux de contrôle d'entrée ($CE_1$, $CE_2$), et j circuits de validation de sortie (40, 41) qui reçoivent chacun un des j signaux de contrôle de sortie ($CS_1$, $CS_2$) ainsi que le signal de fin de traitement de l'opérateur et qui délivrent chacun un des j sémaphores de sortie, les circuits de validation d'entrée commandant un générateur (35) d'une impulsion qui est contrôlé par le signal (22) de nouvelle instruction et par le signal de validation de l'opérateur et qui est réuni à un registre à décalage ($36_1$-$36_4$) à k étages qui délivre les signaux adaptés aux paramètres fonctionnels de l'opérateur ainsi que le signal de fin de traitement par l'opérateur, et qui active les circuits de validation de sortie (40, 41) afin qu'ils émettent leurs sémaphores de sortie ($SS_1$, $SS_2$) chacun des i circuits de validation d'entrée comprenant un moyen d'inversion (30, 31, 33, 50) de l'état logique de leur sémaphore d'entrée, moyen qui est opérationnel pour chaque circuit de validation d'entrée sélectionné lorsqu'un signal (33) de libération de sémaphore a été généré, le portier (12) comprenant en outre un autre générateur (38) d'une impulsion lui-même commandé par le signal de fin de traitement par l'opérateur et par tous les sémaphores de sortie précédemment validés après qu'ils ont été inversés par les portiers suivants (12b), l'autre générateur (38) d'impulsion renvoyant à l'unité de contrôle le signal (23) de fin d'exécution.

8. Circuit intégré selon la revendication 7, caractérisé en ce que, lorsque l'opérateur dispose d'une mémorisation interne, le signal de libération des sémaphores qui opère sur les i circuits de validation d'entrée, est obtenu par la validation de la fin du traitement de l'opérateur, en réunissant une sortie du registre à décalage aux circuits de validation d'entrée.

9. Circuit intégré selon la revendication 7, caractérisé en ce que, lorsque l'opérateur ne dispose pas d'une mémorisation interne, le signal de libération des sémaphores, qui opère sur les i circuits de validation d'entrée, est obtenu en réunissant la sortie de l'autre générateur d'une impulsion avec les circuits de validation d'entrée afin que la validation ne puisse s'effectuer que lorsque le portier suivant a renvoyé le sémaphore inversé.

10. Circuit intégré selon une des revendications 7 à 9, caractérisé en ce que le nombre d'étages et le nombre de sorties du registre à décalage sont déterminés par la fonction et par le temps de traitement de l'opérateur.

11. Circuit intégré selon la revendication 10, caractérisé en ce que l'unité de contrôle délivre au portier un signal de type d'opération afin qu'au cours d'une quelconque opération d'un opérateur le nombre d'étages concernés du registre à décalage soit paramètré de sorte que la durée allouée au traitement soit la plus proche possible du temps nécessaire à l'opérateur pour cette opération.

12. Circuit intégré selon une des revendications 5 à 11, caractérisé en ce que pour chaque portier le signal de nouvelle instruction et le signal de fin d'exécution actionnent, sous le contrôle de l'horloge, un générateur d'une impulsion d'un circuit de contrôle qui émet un sémaphore de contrôle, le circuit de contrôle possédant des moyens d'inversion de l'état logique du sémaphore et l'unité de contrôle possédant des moyens de réception du sémaphore inversé.

13. Procédé de fonctionnement d'un circuit intégré de traitement numérique de données organisé à l'aide d'opérateurs arithmétiques, d'opérateurs logiques, d'opérateurs mémoire, d'opérateurs entrée/sortie, contrôlés par une horloge et par une unité de contrôle qui reçoit des instructions d'un générateur d'instructions et qui transmet aux opérateurs des commandes opératives, caractérisé en ce qu'au moins un opérateur étant muni d'un portier, l'opérateur possédant une fonction de mémorisation, le procédé comprend les étapes suivantes :

    a. réception par un circuit d'entrée de validation (20, 31) du portier (12) d'au moins un sémaphore d'entrée ($SE_i$) qui est validé par un signal de contrôle d'entrée ($CE_i$) issu de l'unité de contrôle (10) et activation d'un générateur d'impulsion (35) du portier,

    b. émission par le générateur d'impulsion (35) d'une impulsion sur l'entrée d'un registre à décalage (361-364) à k étages,

    c. émission par le registre à décalage de signaux (17) adaptés aux paramètres de l'opérateur,

    d. émission par le registre à décalage, sur au moins un circuit de sortie de validation du portier (40, 41), d'un signal (39) d'achèvement du traitement par l'opérateur,

    e. inversion de l'état logique du sémaphore d'entrée ($SE_i$) lorsque l'opérateur n'a plus besoin de données d'entrée ($DE_i$), afin de

transmettre au portier (12) qui le précède le message de prise en compte des données,

    f. émission par le portier d'au moins un sémaphore de sortie ($SS_i$) sur au moins un portier suivant (12b),

    g. réception des données ($DS_j$) de l'opérateur (13) par l'opérateur suivant,

    h. envoi à l'unité de contrôle (10) du signal de fin d'exécution (23) après inversion de l'état logique des sémaphores de sortie validés.

14. Procédé de fonctionnement d'un circuit intégré de traitement numérique de données organisé à l'aide d'opérateurs arithmétiques, d'opérateurs logiques, d'opérateurs mémoire, d'opérateurs entrée/sortie, contrôlés par une horloge et par une unité de contrôle qui reçoit des instructions d'un générateur d'instructions et qui transmet aux opérateurs des commandes opératives, caractérisé en ce qu'au moins un opérateur étant muni d'un portier, l'opérateur ne possédant pas une fonction de mémorisation, le procédé comprend les étapes suivantes :

    a. réception par un circuit d'entrée de validation (30, 31) du portier (12) d'au moins un sémaphore d'entrée ($SE_i$) est validé par un signal de contrôle d'entrée ($CE_i$) issu de l'unité de contrôle (10) et activation d'un générateur d'impulsion (35) du portier,

    b. émission par le générateur d'impulsion (35) d'une impulsion sur l'entrée d'un registre à décalage (361-364) à k étages,

    c. émission par le registre à décalage de signaux (17) adaptés aux paramètres de l'opérateur,

    d. émission par le registre à décalage, sur au moins un circuit de sortie de validation du portier (40, 41), d'un signal (39) d'achèvement du traitement par l'opérateur,

    e. émission par le portier d'au moins un sémaphore de sortie ($SS_j$) sur au moins un portier (12) suivant,

    f. réception des données de l'operateur (13) par l'opérateur suivant,

    g. réception du sémaphore de sortie inversé par le portier suivant correspondant à la prise en compte des données par l'opérateur suivant, et génération d'une impulsion de libèration (33) du sémaphore d'entrée,

    h. désactivation du sémaphore d'entrée par inversion du signal afin d'avertir le portier précédent de la fin de traitement,

    i. envoi à l'unité de contrôle du signal de fin d'exécution après inversion de l'état logique des sémaphores de sortie validés.

15. Procédé selon une des revendications 13 ou 14, caractérisé en ce que, pour extraire le résultat obtenu à l'issue d'un traitement en boucle mettant en oeuvre plusieurs modules formés chacun d'un opérateur et d'un portier, le procédé comprend une étape d'extraction du résultat de l'un des modules de la boucle à l'aide d'un bus d'extraction parallèle.

**Claims**

1. An integrated circuit for digital data processing, utilizing arithmetic operators (13, 13a, 13b), logic operators, storage operators, input/output operators, controlled by a clock (16) and by a control unit (10) which receives instructions (20) from a instruction generator and which supplies the operators with operation commands (15), characterized in that the integrated circuit comprises at least one operator (13, 13a, 13b) which comprises a traffic controller (12) which receives i input semaphores ($SE_i$) and which supplies j output semaphores ($SS_j$), where i and j are not zero, the traffic controller receiving from the control unit (10) i input control signals (14) and at least one control signal (14) for the output data of the operator and, after reception of at least one input semaphore ($SE_i$), originating from a preceding traffic controller (12a) and validated by its input control signal ($CE_i$), by a new instruction signal (22) and by an operator validation signal (21) which is supplied by the control unit (10), supplies its operator (13) with signals adapted to the functional parameters of said operator and, in order to ensure self-timing operation, the traffic controller (12) validates, after completion of the processing by the operator (13), the supply of data by the operator (13) to at least one subsequent operator (13b) by supplying at least one output semaphore ($SS_j$) being applied to at least one subsequent traffic controller (12b) in order to ensure that the latter traffic controller (12b) prepares its operator (13b) for the reception of said data, said traffic controller (12) also comprising means (38) for inverting the logic state of the input semaphores ($SE_i$) already validated by their input control signals when the operator (12) no longer requires input data in order to inform the relevant preceding traffic controllers (12) accordingly, and means (30, 31) for receiving validated output semaphores whose logic state has been inverted (50, 46, 36, 38) by subsequent traffic controllers (12b), said receiving means supplying the control unit with an end of execution signal (23), the transmission of the semaphores taking place successively till the last traffic controller is reached, the integrated circuit comprising modules (11), each of which is formed by the operator (13) and its traffic controller (12), said modules exchanging data via their operators and semaphores via their traffic controllers, thus ensuring self-timing sequencing in each module, the modules and the control unit being controlled by the clock and by the instruction generator.

2. An integrated circuit as claimed in Claim 1, characterized in that it also comprises at least one operator which comprises a traffic controller which receives control signals from the control unit and which, after the reception of at least one input semaphore validated by an input control signal, by a new instruction signal and by an operator validation signal supplied by the control unit, supplies its operator with signals adapted to the functional parameters of said operator and, in order to ensure self-timing sequencing, the traffic controller, upon completion of the processing by the operator, returns an end of execution signal (23) to the control unit, said traffic controller also comprising means (50, 33, 31, 30) for inverting the logic state of the input semaphores already validated by their input control signals ($CE_1$, $CE_2$) in order to inform the relevant preceding traffic controllers (12a) accordingly when the operator (13) no longer requires input data.

3. An integrated circuit as claimed in any one of the Claims 1 or 2, characterized in that it also comprises at least one operator which comprises a traffic controller which receives control signals from the control unit and which, after reception of a new instruction signal and an operator validation signal supplied by the control unit, supplies its operator with signals adapted to the functional parameters of said operator and, in order to ensure self-timing sequencing, the traffic controller validates, upon completion of the processing by the operator, the output of data by the operator to at least one subsequent operator by supplying at least one output semaphore validated by an output control signal, the output semaphore being applied to at least one subsequent traffic controller in order to ensure that this traffic controller prepares its own operator for receiving said data, which traffic controller also comprises means for receiving validated output semaphores whose logic state has been inverted by the subsequent traffic controllers, said receiving means returning an end of execution signal to the control unit.

4. An integrated circuit as claimed in any one of the Claims 1 to 3, characterized in that the adapted signals applied by the traffic controller to its operator can be parameterized ($51$, $45_1$-$45_4$, $36_1$-$36_4$) in order to make these signals adaptable to the parameters of each respective operator, which parameters define the function and the processing time of each operator.

5. An integrated circuit as claimed in any one of the Claims 1 to 4, characterized in that from the control unit each traffic controller receives its new instruction signal (22) and supplies its end of execution signal (23) in the form of a semaphore (25) whose logic state can be inverted by the traffic controller in order to supply the control unit (10) with the end of execution message.

6. An integrated circuit as claimed in any one of the Claims 1 to 5, characterized in that in a chain of operators having the rank n to $(n+p)$, where n and p are integer numbers which are not zero, the operator having the rank n is connected to the operator having the rank $(n+p)$ via a data extraction bus.

7. An integrated circuit as claimed in any one of the Claims 1 to 6, characterized in that the traffic controller comprises i input validation circuits (30, 31), each of which receives one of the i input semaphores ($SE_1$, $SE_2$,) and one of the i input control signals ($CE_1$, $CE_2$), and j output validation circuits (40, 41), each of which receives one of the j output control signals ($CS_1$, $CS_2$) as well as the end of processing signal from the operator, and each of which supplies one of the j output semaphores, the input validation circuits controlling a pulse generator (35) which is controlled by the new instruction signal (22) and by the operator validation signal and which is connected to a shift register ($36_1$-$36_4$) which comprises k stages, which supplies the signals adapted to the functional parameters of the operator as well as the end of processing signal from the operator, and which activates the output validation circuits (40, 41) so that they supply their output semaphores ($SS_1$, $SS_2$), each of the i input validation circuits comprising a means (30, 31, 33,50) for inverting the logic state of their input semaphore, which means is operational for each selected input validation circuit when a signal (33) for de-allocating the semaphore has been generated, the traffic controller (12) also comprising a further pulse generator (38) which itself is controlled by the end of processing signal from the operator and by all previously validated output semaphores after they have been inverted by the subsequent traffic controllers (12b), the further pulse generator (38) returning the end of execution signal (23) to the control unit.

8. An integrated circuit as claimed in Claim 7, characterized in that, when the operator includes internal storage, the signal for de-allocating the semaphores which operates on the i input validation circuits is obtained by validation of the end of processing by the operator by connecting one output of the shift register to the input validation circuits.

9. An integrated circuit as claimed in Claim 7, characterized in that, when the operator does not include internal storage, the signal for de-allocating the semaphores which operates on the i input validation circuits is obtained by connecting the output of the further pulse generator to the input validation circuits in order to ensure that the validation can take place only when the subsequent traffic controller has returned the inverted semaphore.

10. An integrated circuit as claimed in any one of the claims 7 to 9, characterized in that the number of stages and the number of outputs of the shift register are determined by the function and by the processing time of the operator.

11. An integrated circuit as claimed in Claim 10, characterized in that the control unit supplies the traffic controller with a signal indicating the type of operation in order to ensure that during the execution of any operation by an operator the number of shift register stages involved is a parameter so that the time allocated to the processing approximates as well as possible the time required by the operator for executing this operation.

12. An integrated circuit as claimed in any one of the Claims 5 to 11, characterized in that for each traffic controller the new instruction signal and the end of execution signal activate, under the control of the clock, a pulse generator of a control circuit which supplies a test semaphore, the control circuit comprising means for inverting the logic state of the semaphore, the control unit comprising means for receiving the inverted semaphore.

13. A method of operation of an integrated circuit for digital data processing, utilizing arithmetic operators, logic operators, storage operators, input/output operators, controlled by a clock and by a control unit which receives instructions from an instruction generator and which supplies the operators with operation commands, characterized in that at least one operator is provided with a traffic controller, the operator having a storage function, the method comprising the following steps:

a. the reception of at least one input semaphore ($SE_i$) by an input validation circuit (30, 31) of the traffic controller (12), which input semaphore is validated by an input control signal ($CE_i$) supplied by the control unit (10), and activation of a pulse generator (35) of the traffic controller,

b. the supply of a pulse to the input of a shift register ($36_1$-$36_4$) comprising k stages by the pulse generator (35),

c. the supply of signals (17) adapted to the parameters of the operator by the shift register.

d. the supply of a signal (39) indicating completion of the processing by the operator to at least one output validation circuit (40, 41) of the traffic controller by the shift register,

e. the inversion of the logic state of the input semaphore ($SE_i$) when the operator no longer requires input data ($DE_i$) in order to instruct the preceding traffic controller (12) to take into account the data,

f. the supply of at least one output semaphore ($SS_i$) by the traffic controller to at least one subsequent traffic controller (12b),

g. the reception of the operator (13) data ($DS_j$) by the subsequent operator,

h. the supply of the end of execution signal (23) to the control unit (10) after inversion of the logic state of the validated output semaphores.

14. A method of operation of an integrated circuit for digital data processing, utilizing arithmetic operators, logic operators, storage operators, input/output operators, controlled by a clock and by a control unit which receives instructions from an instruction generator and which supplies the operators with operation commands, characterized in that at least one operator is provided with a traffic controller, the operator not having a storage function, said method comprising the following steps:

a. the reception of at least one input semaphore ($SE_i$) by an input validation circuit (30, 31) of the traffic controller (12), which input semaphore is validated by an input control signal ($CE_i$) supplied by the control unit (10), and activation of a pulse generator (35) of the traffic controller,

b. the supply of a pulse on the input of a shift register ($36_1$-$36_4$) comprising k stages by the pulse generator (35),

c. the supply of signals (17) adapted to the parameters of the operator by the shift register,

d. the supply of a signal (39) indicating completion of the processing by the operator to at least one output validation circuit (40, 41) of the traffic controller by the shift register,

e. the supply of at least one output semaphore ($SS_i$) to at least one subsequent traffic controller (12) by the traffic controller,

f. the reception of the operator (13) data by the subsequent operator,

g. the reception of the output semaphore, inverted by the subsequent traffic controller, corresponding to the taking into account of the data by the next operator, and the generating of a pulse (33) for de-allocating the input semaphore,

h. the de-activation of the input semaphore by inversion of the signal in order to inform the preceding traffic controller of the end of processing,

i. the supply of the end of execution signal to the control unit after inversion of the logic state of the validated output semaphores.

15. A method as claimed in any one of the Claims 13 or 14, characterized in that in order to extract the result obtained upon completion of a looped processing operation utilizing several modules, each of which consists of an operator and a traffic controller, the method includes a step for extracting the result from one of the modules of the loop by means of a parallel extraction bus.

**Patentansprüche**

1. Integrierte Schaltung zur digitalen Datenverarbeitung, mit arithmetischen Operatoren (13, 13a, 13b), logischen Operatoren, Speicheroperatoren, Eingangs-/Ausgangsoperatoren, die alle von einem Taktgeber (16) und von einer Steuereinheit (10), die Befehle (20) eines Befehlsgenerators erhält und an die Operatoren Betriebskommandos (15) übermittelt, gesteuert werden, dadurch gekennzeichnet, daß die integrierte Schaltung mindestens einen Operator (13, 13a, 13b) enthält, der mit einer Verkehrsleiteinheit (12) versehen ist, die i Eingangsse-

maphore (SE$_i$) empfängt und j Ausgangssemaphore (SS$_j$) aussendet, mit i und j ungleich Null, wobei die Verkehrsleiteinheit von der Steuereinheit (10) i Eingangssteuersignale (14) und mindestens ein Ausgangssteuersignal (14) für die Daten des Operators empfängt, und, nach Empfang mindestens eines von einer vorhergehenden Verkehrsleiteinheit (12a) stammenden, durch sein Eingangssteuersignal (CE$_i$), ein Neuer-Befehl-Signal (22) und ein Operator-Freigabesignal (21), die von der Steuereinheit ausgesendet wurden, gültig gemachten Eingangssemaphors (SE$_i$), ihrem Operator (13) an die Funktionsparameter des erwähnten Operators angepaßte Signale (15) liefert, und die Verkehrsleiteinheit, um selbsttaktend arbeiten zu können, beim Abschluß der Verarbeitung durch den Operator (13) die Ausgabe von Daten durch den Operator an mindestens einen folgenden Operator (13b) freigibt, indem sie mindestens einen von einem Ausgangssteuersignal gültig gemachten Ausgangssemaphor (SS$_j$) aussendet, wobei der Ausgangssemaphor (SS$_j$) nach mindestens einer folgenden Verkehrsleiteinheit (12b) übertragen wird, damit diese folgende Verkehrsleiteinheit (12b) ihren eigenen Operator (13b) zum Empfang der erwähnten Daten einstellt, wobei die erwähnte Verkehrsleiteinheit (12) auch Mittel (38) enthält zur Inversion des Logikzustandes der bereits von ihren Eingangssteuersignalen gültig gemachten Eingangssemaphoren (SE$_i$), wenn der Operator (13) keine Eingangsdaten mehr benötigt, um dies den betreffenden vorhergehenden Verkehrsleiteinheiten (12a) zu melden, und Mittel (30, 31) zum Empfang der gültig gemachten Ausgangssemaphore, deren Logikzustand von den darauffolgenden Verkehrsleiteinheiten (12b) invertiert ist (50, 46, 36, 38), wobei die erwähnten Empfangsmittel zur Steuereinheit ein Ende-der-Ausführung-Signal (23) zurücksenden, die Übertragung der Semaphore hintereinander bis zur letzten Verkehrsleiteinheit abläuft und die integrierte Schaltung aus jeweils dem Operator (13) und seiner Verkehrsleiteinheit (12) bestehende Module (11) enthält, welche Module über ihre Operatoren Daten und über ihre Verkehrsleiteinheiten Semaphore austauschen, wodurch für jedes Modul eine selbsttaktende Ablaufsteuerung sichergestellt ist, wobei die Module und die Steuereinheit von dem Taktgeber und dem Befehlsgenerator gesteuert werden.

2. Integrierte Schaltung nach Anspruch 1, dadurch gekennzeichnet, daß sie außerdem mindestens einen Operator enthält, der mit einer Verkehrsleiteinheit versehen ist, die Steuersignale von der Steuereinheit empfängt und, nach dem Empfang mindestens eines von einem Eingangssteuersignal, einem Neuer-Befehl-Signal und einem Operator-Freigabesignal, die von der Steuereinheit ausgesendet wurden, gültig gemachten Eingangssemaphors, ihrem Operator an Funktionsparameter des erwähnten Operators angepaßte Signale liefert, und die Verkehrsleiteinheit, um eine selbsttaktende Ablaufsteuerung sicherzustellen, beim Abschluß der Bearbeitung durch den Operator an die Steuereinheit ein Ende-der-Ausführung-Signal (23) zurücksendet, wobei die Verkehrsleiteinheit auch Mittel (50, 33, 31, 30) enthält zur Inversion des Logikzustandes der bereits von ihren Eingangssteuersignalen (CE$_1$, CE$_2$) gültig gemachten Eingangssemaphoren, wenn der Operator (13) keine Eingangsdaten mehr benötigt, um dies den betreffenden vorhergehenden Verkehrsleiteinheiten (12a) zu melden.

3. Integrierte Schaltung nach einem der Ansprüche 1 oder 2, dadurch gekennzeichnet, daß sie außerdem mindestens einen Operator enthält, der mit einer Verkehrsleiteinheit versehen ist, die Steuersignale der Steuereinheit empfängt und die, nach dem Empfang eines Neuer-Befehl-Signals und eines Operator-Freigabesignals, die von der Steuereinheit ausgesendet wurden, ihrem Operator an Funktionsparameter des erwähnten Operators angepaßte Signale liefert, und die Verkehrsleiteinheit, um eine selbsttaktende Ablaufsteuerung sicherzustellen, am Abschluß der Verarbeitung durch den Operator die Ausgabe der Daten durch den Operator an mindestens einen folgenden Operator freigibt, und mindestens einen von einem Ausgangssteuersignal gültig gemachten Ausgangssemaphor aussendet, wobei der Ausgangssemaphor nach mindestens einer folgenden Verkehrsleiteinheit übertragen wird, damit diese folgende Verkehrsleiteinheit ihren eigenen Operator zum Empfang der erwähnten Daten einstellt, wobei die erwähnte Verkehrsleiteinheit auch Mittel zum Empfang der gültig gemachten Ausgangssemaphore, deren Logikzustand von den darauffolgenden Verkehrsleiteinheiten invertiert ist, enthält, wobei die erwähnten Empfangsmittel ein Ende-der-Ausführung-Signal an die Steuereinheit zurücksenden.

4. Integrierte Schaltung nach einem der Ansprüche 1 bis 3, dadurch gekennzeichnet, daß die von der Verkehrsleiteinheit an ihren Operator gelieferten, angepaßten Signale parametrierbar (51, 45$_1$ - 45$_4$, 36$_1$ - 36$_4$) sind, damit sie an die jedem Operator eigenen Parameter angepaßt werden können, wobei diese Parameter die Funktion und die Verarbeitungszeit für jeden Operator definieren.

5. Integrierte Schaltung nach einem der Ansprüche 1 bis 4, dadurch gekennzeichnet, daß jede Verkehrsleiteinheit von der Steuereinheit ihr Neuer- Befehl-Signal (22) empfängt und ihr Ende-der-Ausführung-Signal (23) in Form eines Semaphors (25) aussendet, dessen Logikzustand durch die Verkehrsleiteinheit invertiert werden kann, um der Steuereinheit (10) die Nachricht vom Ende der Ausführung zu übermitteln.

6. Integrierte Schaltung nach einem der Ansprüche 1 bis 5, dadurch gekennzeichnet, daß in einer Kette von Operatoren der Ordnung n bis (n + p), mit n und p ganzzahlig und ungleich Null, der Operator der Ordnung n mit dem Operator der Ordnung (n + p) über einen Datenauslesebus gekoppelt wird.

7. Integrierte Schaltung nach einem der Ansprüche 1 bis 6, dadurch gekennzeichnet, daß die Verkehrsleiteinheit i Eingangsfreigabeschaltkreise (30, 31) enthält, von denen jeder einen der i Eingangssemaphore ($SE_1$, $SE_2$) und eines der i Eingangssteuersignale ($CE_1$, $CE_2$) empfängt, sowie j Ausgangsfreigabeschaltkreise (40, 41), von denen jeder eines der Ausgangssteuersignale ($CS_1$, $CS_2$) sowie das Signal des Endes der Bearbeitung durch den Operator empfängt, und die jeweils einen der j Ausgangssemaphore liefern, wobei die Eingangsfreigabeschaltkreise einen Impulsgenerator (35) ansteuern, der von dem Neuer-Befehl-Signal (22) und dem Freigabesignal des Operators gesteuert wird, und die mit einem Schieberegister ($36_1$-$36_4$) von k Stufen, das die an die Funktionsparameter des Operators angepaßten Signale sowie das Signal des Endes der Bearbeitung durch den Operator liefert, gekoppelt ist, und die die Ausgangsfreigabeschaltkreise (40,41) aktiviert, damit diese ihre Ausgangssemaphore ($SS_1$, $SS_2$) aussenden, wobei jeder der i Ausgangsfreigabeschaltkreise ein Mittel (30, 31, 33, 50) zur Inversion des Logikzustandes ihres Eingangssemaphors enthält, welches Mittel für jeden ausgewählten Eingangsfreigabeschaltkreis betriebsfähig ist, wenn ein Signal (33) zum Semaphorfreigeben erzeugt worden ist, wobei die Verkehrsleiteinheit (12) auch einen weiteren Impulsgenerator (38) enthält, der selbst von dem Signal des Endes der Bearbeitung durch den Operator und von allen Ausgangssemaphoren, die zuvor gültig gemacht wurden, nachdem sie von den folgenden Verkehrsleiteinheiten (12b) invertiert worden sind, angesteuert wird, wobei der andere Impulsgenerator (38) das Ende-der-Ausführung-Signal an die Steuereinheit (23) zurücksendet.

8. Integrierte Schaltung nach Anspruch 7, dadurch gekennzeichnet, daß, wenn der Operator über eine interne Speicherung verfügt, das Signal zum Freigeben der Semaphore, das auf die i Eingangsfreigabeschaltkreise wirkt, durch die Freigabe des Endes der Bearbeitung durch den Operator erhalten wird, wobei ein Ausgang des Schieberegisters mit den Eingangsfreigabeschaltkreisen gekoppelt wird.

9. Integrierte Schaltung nach Anspruch 7, dadurch gekennzeichnet, daß, wenn der Operator nicht über eine interne Speicherung verfügt, das Signal zum Freigeben der Semaphore, das auf die i Eingangsfreigabeschaltkreise wirkt, durch Kopplung des Ausgangs des anderen Impulsgenerators mit den Eingangsfreigabeschaltkreisen erhalten wird, damit die Freigabe nur stattfinden kann, wenn die folgende Verkehrsleiteinheit den invertierten Semaphor zurückgesendet hat.

10. Integrierte Schaltung nach einem der Ansprüche 7 bis 9, dadurch gekennzeichnet, daß die Anzahl der Stufen und die Anzahl der Ausgänge des Schieberegisters durch die Funktion und die Bearbeitungszeit des Operators bestimmt sind.

11. Integrierte Schaltung nach Anspruch 10, dadurch gekennzeichnet, daß die Steuereinheit an die Verkehrsleiteinheit ein Operationstypsignal liefert, damit während einer beliebigen Operation eines Operators die Zahl der betroffenen Stufen des Schieberegisters parametriert wird, so daß die zulässige Dauer der Bearbeitung möglichst gut der Zeit, die der Operator für diese Operation benötigt, angenähert wird.

12. Integrierte Schaltung nach einem der Ansprüche 5 bis 11, dadurch gekennzeichnet, daß für jede Verkehrsleiteinheit das Neuer-Befehl-Signal und das Ende-der-Ausführung-Signal taktgesteuert einen Impulsgenerator eines Steuerschaltkreises antreiben, der einen Steuerungssemaphor aussendet, wobei der Steuerschaltkreis Mittel zur Inversion des Logikzustandes des Semaphors und die Steuereinheit Mittel zum Empfang des invertierten Semaphors besitzt.

**13.** Verfahren der Funktionsweise einer integrierten Schaltung zur digitalen Datenverarbeitung, welche Schaltung arithmetische Operatoren, logische Operatoren, Speicheroperatoren, Eingangs-/Ausgangsoperatoren enthält, die von einem Taktgeber und von einer Steuereinheit, die Befehle eines Befehlsgenerators erhält und an die Operatoren Betriebskommandos übermittelt, gesteuert werden, dadurch gekennzeichnet, daß mindestens ein Operator mit einer Verkehrsleiteinheit versehen ist, wobei der Operator eine Speicherungsfunktion besitzt, und das Verfahren aus den folgenden Schritten besteht:

a. Empfang mindestens eines Eingangssemaphors ($SE_i$) durch einen Eingangsfreigabeschaltkreis (30, 31) der Verkehrsleiteinheit (12), welcher Eingangssemaphor durch ein von der Steuereinheit (10) ausgesendetes Eingangssteuersignal ($CE_i$) gültig gemacht ist, und Aktivierung eines Impulsgenerators (35) der Verkehrsleiteinheit,

b. Aussendung eines Impulses an den Eingang eines k-stufigen Schieberegisters ($36_1$ - $36_4$) durch den Impulsgenerator (35),

c. Aussendung von an Parameter des Operators angepaßten Signalen (17) durch das Schieberegister,

d. Aussendung eines Signals (39) der Fertigstellung der Bearbeitung durch den Operator an mindestens einen Freigabeausgangsschaltkreis der Verkehrsleiteinheit (40, 41) durch das Schieberegister,

e. Inversion des Logikzustandes des Eingangssemaphors ($SE_i$), wenn der Operator keine Eingangsdaten ($DE_i$) mehr benötigt, um an die vorhergehende Verkehrsleiteinheit (12) die Mitteilung, daß die Daten berücksichtigt worden sind, zu übermitteln,

f. Aussendung mindestens eines Ausgangssemaphors ($SS_i$) an mindestens eine folgende Verkehrsleiteinheit (12b) durch die Verkehrsleiteinheit,

g. Empfang der Daten ($DS_j$) des Operators (13) durch den folgenden Operator,

h. Sendung des Ende-der-Ausführung-Signals (23) nach Inversion des Logikzustandes der gültig gemachten Ausgangssemaphore zur Steuereinheit (10).

**14.** Verfahren der Funktionsweise einer integrierten Schaltung zur digitalen Datenverarbeitung, welche Schaltung arithmetische Operatoren, logische Operatoren, Speicheroperatoren, Eingangs-/Ausgangsoperatoren enthält, die von einem Taktgeber und von einer Steuereinheit, die Befehle eines Befehlsgenerators erhält und an die Operatoren Betriebskommandos übermittelt, gesteuert werden, dadurch gekennzeichnet, daß mindestens ein Operator mit einer Verkehrsleiteinheit versehen ist, wobei der Operator keine Speicherungsfunktion besitzt und das Verfahren aus den folgenden Schritten besteht:

a. Empfang mindestens eines Eingangssemaphors ($SE_i$) durch einen Eingangsfreigabeschaltkreis (30, 31) der Verkehrsleiteinheit (12), welcher Eingangssemaphor durch ein von der Steuereinheit (10) ausgesendetes Eingangssteuersignal ($CE_i$) gültig gemacht ist, und Aktivierung eines Impulsgenerators (35) der Verkehrsleiteinheit,

b. Aussendung eines Impulses an den Eingang eines k-stufigen Schieberegisters ($36_1$ - $36_4$) durch den Impulsgenerator (35),

c. Aussendung von an Parameter des Operators angepaßten Signalen (17) durch das Schieberegister,

d. Aussendung eines Signals (39) der Beendigung der Bearbeitung durch den Operator an mindestens einen Freigabeausgangsschaltkreis der Verkehrsleiteinheit (40, 41) durch das Schieberegister,

e. Aussendung mindestens eines Ausgangssemaphors ($SS_i$) an mindestens eine folgende Verkehrsleiteinheit (12) durch die Verkehrsleiteinheit,

f. Empfang der Daten ($DS_j$) des Operators (13) durch den folgenden Operator,

g. Empfang des invertierten Ausgangssemaphors durch die folgende Verkehrsleiteinheit, entsprechend der Berücksichtigung der Daten durch den folgenden Operator, und Erzeugung eines Impulses (33) zum Freigeben des Eingangssemaphors,

h. Deaktivierung des Eingangssemaphors durch Inversion des Signals, um der vorangehenden Verkehrsleiteinheit das Ende der Bearbeitung zu melden,

i. Sendung des Ende-der-Ausführung-Signals (23) nach Inversion des Logikzustandes der gültig gemachten Ausgangssemaphore zur Steuereinheit (10).

**15.** Verfahren nach einem der Ansprüche 13 oder 14, dadurch gekennzeichnet, daß es, um das erhaltene Ergebnis am Ende einer Schleifenbearbeitung, unter Benutzung mehrerer aus jeweils einem Operator und einer Verkehrsleiteinheit gebildeten Module, auszulesen, einen Schritt zum Auslesen des Ergebnisses aus einem der Module der Schleife mittels eines parallelen Auslesebusses enthält.

FIG.1A

FIG.1B

FIG.2

FIG.3

FIG.6

FIG. 4

FIG.5

EP 0 269 167 B1

FIG.7A

FIG.7B